Europäisches Patentamt

European Patent Office

Office européen des brevets

(19)

(11) Veröffentlichungsnummer: **0 055 736**
**B1**

(12) **EUROPÄISCHE PATENTSCHRIFT**

(45) Veröffentlichungstag der Patentschrift:
**13.02.85**

(51) Int. Cl.⁴: **G 01 F 11/26**

(21) Anmeldenummer: **81901920.9**

(22) Anmeldetag: **03.07.81**

(86) Internationale Anmeldenummer:
**PCT/EP 81/00092**

(87) Internationale Veröffentlichungsnummer:
**WO 82/00348 (04.02.82 Gazette 82/4)**

(54) **DOSIERVORRICHTUNG MIT KUGELVENTIL UND VERFAHREN ZUM BETRIEB.**

(30) Priorität: **10.07.80 DE 3026067**

(43) Veröffentlichungstag der Anmeldung:
**14.07.82 Patentblatt 82/28**

(45) Bekanntmachung des Hinweises auf die Patenterteilung:
**13.02.85 Patentblatt 85/7**

(84) Benannte Vertragsstaaten:
**AT CH GB LI LU NL SE**

(56) Entgegenhaltungen:
**DE - A - 2 619 990**
**DE - C - 1 202 672**
**DE - U - 7 810 073**
**FR - A - 402 258**
**GB - A - 24 593**
**NL - A - 6 617 452**

(73) Patentinhaber: **Henkel Kommanditgesellschaft auf Aktien, Postfach 1100 Henkelstrasse 67, D-4000 Düsseldorf-Holthausen (DE)**

(72) Erfinder: **VIERKÖTTER, Peter, Sperberweg 7, D-5090 Leverkusen (DE)**
Erfinder: **WELTGEN, Paul-Otto, Tucherweg 11, D-4010 Hilden (DE)**

(74) Vertreter: **Bornemann, Dieter, Dipl.-Ing. et al, c/o Henkel Kommanditgesellschaft auf Aktien - Patentabteilung - Postfach 1100 Henkelstrasse 67, D-4000 Düsseldorf (DE)**

BUNDESDRUCKEREI BERLIN

**Beschreibung**

Die Erfindung betrifft eine auf eine vorzugsweise flexible Flasche aufgesetzte, ein Kugelventil aufweisende Dosiervorrichtung mit einer in einer Schwenkstellung der Flasche deren Ausgießöffnung verschließenden Ventilkugel sowie mit einem in seiner Mantelfläche mindestens einen zum Flascheninnern hinführenden Längsschlitz aufweisenden Ventilkugelführungsrohr. Die Erfindung bezieht sich ferner auf ein Verfahren zum Betrieb der Dosiervorrichtung.

Eine derartige Dosiervorrichtung ist bereits bekannt aus der NL-A-6 617 452. Bei dieser bekannten Konstruktion ist die Dosiergenauigkeit abhängig von dem Grad der Schrägstellung der Flasche und damit des integrierten Kugeldosierers. Die Kugel strebt umso schneller der Schließstellung zu, je steiler die Flasche bei der Produktentnahme gehalten wird. Damit hat die Fallgeschwindigkeit der Kugel in Abhängigkeit von der Schüttstellung des Dosierers Einfluß auf die Dosiergenauigkeit. Eine kontinuierliche Dosierung des Produkts ist mit dieser Dosiervorrichtung nicht möglich.

Dosierer bzw. Dosiereinrichtungen, die bei jedem Kippen des Behälters eine bestimmte Flüssigkeitsmenge freigeben, sind weiterhin auch aus DE-C-1 202 672 bekannt. Dabei darf der Behälter nicht flexibel sein, weil schon kleine auf den Behälter ausgeübte Drücke zu erheblichen Dosierschwankungen führen können.

Bei einer weiteren aus dem DE-U-7 810 073 bekannten Dosiervorrichtung kann die Dosiermenge zwar durch Vorgabe einer wechselweise gegenüber dem Behälterinnenraum und dem Außenraum abzudichtenden Dosierblase relativ genau vorgegeben und durch Kippen des Behälters der Dosierkammer entnommen werden. Die Einrichtung ist aber wegen der beiden Ventile nicht nur aufwendig in der Herstellung, sondern auch umständlich in der Handhabung. Da ferner das Produkt durch Kippen aus der Dosierkammer entnommen wird, fließt es — ohne Druck — aus der Kammer.

Gemäß der DE-A-2 619 990 ist ein Dosieraufsatz für Behältermündungen in Form eines hohlen, auf den Behälterhals aufsetzbaren Verschlußstopfens bekannt. Das vorgesehene Kugelventil schließt den Hohlraum ab und zwar lediglich bei senkrechter Stellung des Aufsatzes unter der Wirkung der Schwerkraft. Dabei kommt es darauf an, daß der bekannte hohle Verschlußstopfen zunächst durch Über-Kopf-Stellung der Flasche gänzlich mit Flüssigkeit angefüllt wird. Sodann erfolgt unter Schwerkraftwirkung bei Wiedereinnehmen der aufrechten Flaschenstellung ein Verschluß des mit Flüssigkeit gefüllten Hohlstopfens durch das Kugelventil.

Nunmehr kann der verschlossene Hohlstopfen von der Flasche abgenommen und der Verbrauchsstelle zugeführt werden. Dort wird dann der Hohlstopfen durch Schrägstellen und damit Öffnen des Kugelventils entleert. Eine kontinuierliche Dosierung von Flüssigkeit ermöglicht dieser Dosieraufsatz nicht.

Der Erfindung liegt die Aufgabe zugrunde, die eingangs genannte Vorrichtung dergestalt weiterzubilden, daß eine Dosierung unter Druck bzw. durch Druck auf die Flasche erfolgen kann und damit ein einer bestimmten Produktmenge entsprechender »Spritzer« zu dosieren ist. Darüber hinaus soll die Vorrichtung aber auch eine kontinuierliche Dosierung des Produktes gestatten.

Die erfindungsgemäße Lösung ist bei einer Dosiereinrichtung der eingangs genannten Art gekennzeichnet durch ein an dem der Ausgießöffnung gegenüberliegenden Ende des Ventilkugelführungsrohrs angebrachtes, einen Boden aufweisendes Unterteil, das von der Rohrwand ausgehend auf einer mindestens dem halben Ventilkugeldurchmesser gleichen Länge — gemessen in der Projektion der Mantellinie auf die Rohrlängsachse — trichterförmig erweitert ist, wobei der zwischen der Rohrlängsachse und einer Mantellinie der Fläche des trichterförmigen Bereichs des Unterteils aufgespannte Winkel mindestens 30° beträgt.

Zweckmäßige Ausgestaltungen der Vorrichtung sind Gegenstand der Ansprüche 2 bis 4.

Die Erfindung betrifft weiterhin ein Verfahren zum Betrieb der Dosiervorrichtung, welches darin besteht, daß die Flasche mit aufgesetzter Dosiervorrichtung zunächst in eine mittlere Schwenkstellung gekippt wird, bei der die Ventilkugel in dem an das Ventilkugelführungsrohr angesetzten Unterteil auf dem trichterförmigen Bereich liegenbleibt, und daß zum abrupten Abbruch der Dosierung die Flasche so weitergeschwenkt wird, daß die Ventilkugel im Ventilkugelführungsrohr bis zum Ventildichtsitz absinkt.

Durch die erfindungsgemäße Ausbildung der Dosiervorrichtung wird erreicht, daß bei der Produktentnahme durch Kippen und gegebenenfalls durch Druck auf die Flasche die Ventilkugel zunächst im trichterförmig abgewinkelten Unterteil liegenbleibt, bis sie bei weiterem Kippen der Flasche in eine steilere Kopflage in das Ventilkugelführungsrohr rollt und in der Flüssigkeit bis zum Auftreffen auf dem im unteren Ende des Führungsrohrs vorgesehenen Ventilsitz absinkt.

Beim Auftreffen auf dem Ventilsitz wird die Dosierung abrupt beendet. Beim Kippen der Flasche dringt also zunächst Flüssigkeit durch die seitliche Öffnung des Ventilkugelführungsrohrs zum Ausfluß der Dosiervorrichtung. Da dabei — bei Vorhandensein einer Belüftung — zumindest der gesamte Druck der in der Flasche befindlichen Flüssigkeitssäule auf dem Ausgang des Dosierers ruht, tritt das Produkt unter Druck aus der Öffnung bzw. Düse aus. Der Flüssigkeitsdruck kann bei flexibler Ausgestaltung der Flaschenwandung durch Zusammenquetschen der letzteren — auch bei Nichtvorhandensein einer Belüftung — wesentlich erhöht werden. Der durch Kippen und gegebenenfalls Druckausübung erzeugte Flüssigkeitsstrahl läßt sich dann einem Merkmal der Erfindung allein durch weiteres Kippen der Flasche abrupt beenden.

Durch die trichterförmige Ausgestaltung des an das Ventilkugelführungsrohr angesetzten Unterteils wird erreicht, daß die Ventilkugel in der Flüssigkeit immer absinkt, derart, daß auch eine Restentleerung der Flasche gewährleistet wird. Für die Steigung des trichterförmigen bzw. konischen Ansatzes des Unterteils relativ zum Führungsrohr kommen je nach Art, insbesondere Viskosität, der Flüssigkeit verschiedene Öffnungswinkel in Frage. Vorzugsweise soll der zwischen der Rohrlängsrichtung und der Fläche des trichterförmigen Bereichs des Unterteils aufgespannte Winkel mindestens 30° betragen und insbesondere zwischen etwa 45° und 60° liegen. Das Einstellen einer begrenzten Produktmenge mit Hilfe der Dosiervorrichtung wird auch durch das Verhältnis der Wichte der verwendeten Ventilkugel zur Wichte der zu dosierenden Flüssigkeit — also die relative Wichte der Kugel — vorgegeben. Außer durch Vorgabe des vorgenannten Winkels läßt sich die Geschwindigkeit, mit der ein Flüssigkeitsstrahl gemäß einem Merkmal der Erfindung zu beenden ist, demgemäß auch durch die Wahl der Wichte der Ventilkugel vorgeben.

Die Verbindung zwischen dem Flascheninnern und dem Ausgang der Dosiervorrichtung wird gemäß einem Merkmal der Erfindung durch mindestens eine seitliche Öffnung des Ventilkugelführungsrohrs dargestellt. Diese seitliche Öffnung kann etwa als parallel zur Rohrlängsachse verlaufender Längsschlitz ausgebildet sein, der bis in die Nähe des am Übergang zwischen Führungsrohr und Ausgießöffnung vorgesehenen Ventildichtsitzes reichen kann. Grundsätzlich lassen sich anstelle des Schlitzes aber auch mehrere einzelne Öffnungen im Führungsrohr vorsehen. Die nach dem Einfallen der Ventilkugel in das Führungsrohr noch aus der Ausgießöffnung der Dosiervorrichtung austretende Produktmenge besteht zumindest aus dem Produktvolumen, das jeweils im Raum zwischen der Ausgießöffnung und dem angrenzenden Ende des Schlitzes bzw. der Öffnung des Führungsrohrs zu speichern ist.

Anhand der schematischen Darstellung eines Ausführungsbeispiels werden weitere Einzelheiten der Erfindung erläutert. Es zeigt

Fig. 1 einen Längsschnitt durch eine auf eine Flasche aufgesetzte Dosiervorrichtung; und

Fig. 2 und 3 verschiedene Schwenkstellungen der Dosiervorrichtung nach Fig. 1.

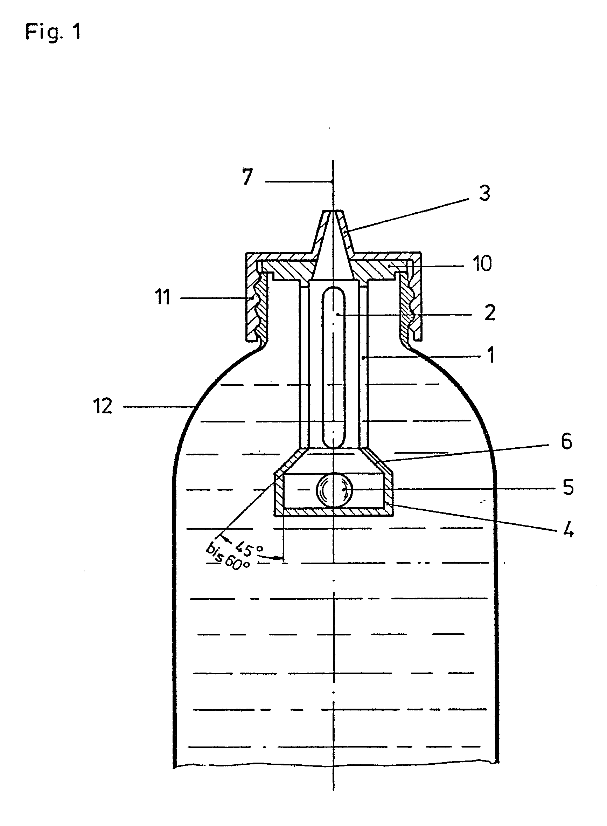

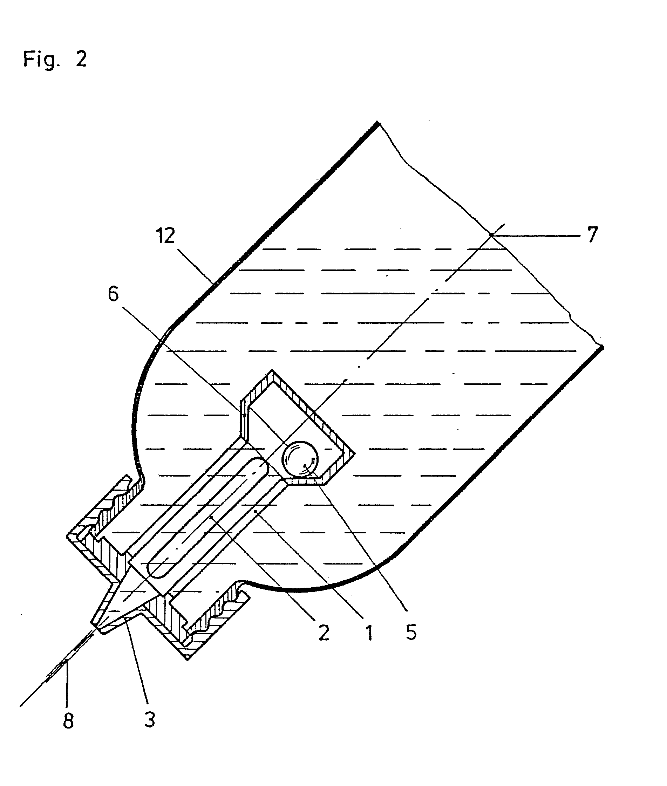

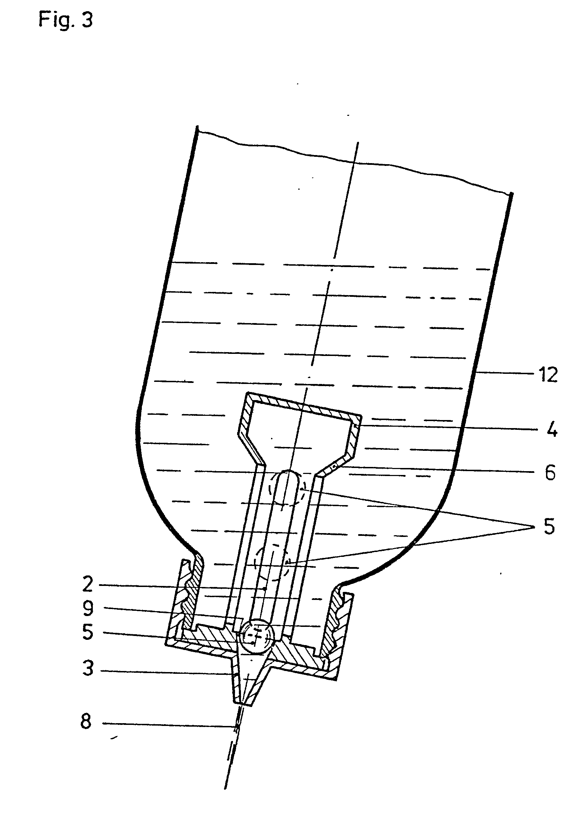

Die erfindungsgemäße Vorrichtung besteht im Ausführungsbeispiel nach Fig. 1 bis 3 aus einem Ventilkugelführungsrohr 1 mit Längsschlitze 2, an das an einem Längsende eine als Spritzdüse ausgebildete Ausgießöffnung 3 und am anderen Längsende ein von der Rohrwand aus trichterförmig erweitertes Unterteil 4 angesetzt ist. In der Vorrichtung befindet sich eine Kugel 5. Der sich von der Rohrwand aus trichterförmig erweiternde Bereich 6 des Unterteils 4 soll mindestens eine so große Ausdehnung haben und relativ zur Rohrlängsachse 7 um einen solchen Winkel von mindestens etwa 30°, insbesondere etwa 45° bis 60°, geneigt sein, daß eine Kugel 5 in einer etwa durch Fig. 2 angegebenen Schwenkstellung, bei der Flüssigkeit 8 aus der Ausgießöffnung 3 austritt, auf dem trichterförmigen Bereich 6 des Unterteils 4 liegenbleibt, ohne in das Rohr 1 zu fallen. Durch weiteres Schwenken gemäß Fig. 3 soll dann aber zu erreichen sein, daß die Kugel 5 in dem Rohr 1 absinkt und auf den Ventildichtsitz 9 an der Ausgießöffnung 3 fällt.

Im Ausführungsbeispiel ist in die Dosiervorrichtung eine Kopfplatte 10 integriert, die mit Hilfe einer Schraubkappe 11 auf dem Hals einer Flasche 12 festzulegen ist. Grundsätzlich kann anstelle der Schraubverbindung auch eine andere Befestigung, zum Beispiel ein Pfropfen, vorgesehen werden. Die Dosiervorrichtung gemäß Ausführungsbeispiel enthält eine Belüftung des Innenraumes der Flasche 12. Diese besteht daher zweckmäßigerweise aus flexiblem Kunststoff, und das Dosieren wird durch Kippen sowie gleichzeitiges Ausüben eines Drucks auf die Flaschenwand bewirkt. Bei Anwendung der Dosiervorrichtung im Zusammenhang mit einer Flasche aus nichtflexiblem Material wird zweckmäßigerweise im Bereich der Kopfplatte 10 oder eines entsprechenden Stopfens anzuordnende Belüftung des Flascheninnenraums vorgesehen.

Bezugszeichenliste

1 = Führungsrohr
2 = Schlitz
3 = Ausgießöffnung
4 = Unterteil
5 = Kugel
6 = trichterförmiger Bereich
7 = Rohrlängsachse
8 = Flüssigkeit
9 = Ventildichtsitz
10 = Kopfplatte
11 = Schraubkappe
12 = Flasche

**Patentansprüche**

1. Auf eine vorzugsweise flexible Flasche (12) aufgesetzte, ein Kugelventil aufweisende Dosiervorrichtung mit einer in einer Schwenkstellung der Flasche (12) deren Ausgießöffnung (3) verschließenden Ventilkugel (5) sowie mit einem in seiner Mantelfläche mindestens einen zum Flascheninnern hinführenden Längsschlitzen (2) aufweisenden Ventilkugelführungsrohr (1), gekennzeichnet durch ein an dem der Ausgießöffnung (3) gegenüberliegenden Ende des Ventilkugelführungsrohrs (1) angebrachtes, einen Boden aufweisendes Unterteil (4), das von der Rohrwand ausgehend auf einer mindestens dem halben Ventilkugeldurchmesser gleichen Länge — gemessen in der Projektion der Mantellinie auf die Rohrlängsachse — trichterförmig erweitert ist, wobei der zwischen der Rohrlängsachse (7) *und einer Mantellinie der Fläche des trichterförmigen Bereiches (6) des Unterteils (4)* aufgespannte Winkel mindestens 30° beträgt.

2. Dosiervorrichtung nach Anspruch 1, dadurch gekennzeichnet, daß der Winkel zwischen 45° und 60° liegt.

3. Dosiervorrichtung nach Anspruch 2, dadurch gekennzeichnet, daß der Schlitz (2) bis in die Nähe des am Übergang zwischen Ventilkugelführungsrohr (1) und Ausgießöffnung (3) vorgesehenen Ventildichtsitzes (9) reicht.

4. Dosiervorrichtung nach einem der Ansprüche 1 bis 3, dadurch gekennzeichnet, daß die lichte Weite des Ventilkugelführungsrohrs (1) deutlich größer als der Ventilkugeldurchmesser und daß dieser deutlich größer als die Weite des Längsschlitzes (2) des Ventilkugelführungsrohrs (1) ist.

5. Verfahren zum Betrieb der Dosiervorrichtung nach einem der Ansprüche 1 bis 4, dadurch gekennzeichnet, daß die Flasche (12) mit aufgesetzter Dosiervorrichtung zunächst in eine mittlere Schwenkstellung gekippt wird, bei der die Ventilkugel (5) in dem an das Ventilkugelführungsrohr (1) angesetzten Unterteil (4) auf dem trichterförmigen Bereich (6) liegenbleibt, und daß zum abrupten Abbruch der Dosierung die Flasche (12) so weitergeschwenkt wird, daß die Ventilkugel (5) im Ventilkugelführungsrohr (1) bis zum Ventildichtsitz (9) absinkt.

## Claims

1. Metering device, placed on a preferably flexible bottle (12) and displaying a ball valve, with a valve ball (5), which in one pivotal setting of the bottle (12) closes off its spout opening (3) as well as with a valve ball guide tube (1) displaying in its shell surface at least one longitudinal slot (2) leading to the interior of the bottle, characterised by a lower part (4), which is mounted at the and, lying opposite the spout opening (3). of the valve ball guide tube (1), displays a base and which starting out from the tube wall is enlarged in funnel shape over a length which — measured in the projection of the generatrix onto the longitudinal tube axis — is equal to at least half the diameter of the valve ball, wherein the angle subtended between the longitudinal tube axis (7) and a generatrix of the surface of the funnel shaped region (6) of the lower part (4) amounts to at least 30°.

2. Metering device according to claim 1, characterised thereby, that the angle lies between 45° and 60°.

3. Metering device according to claim 2, characterised thereby, that the slot (2) reaches as far as the proximity of the valve sealing seat (9) provided at the transition between valve ball guide tube (1) and spout opening (3).

4. Metering device according to one of the claims 1 to 3, characterised thereby, that the clear width of the valve ball guide tube (1) is significantly greater than the valve ball diameter and that this is significantly greater than the width of the longitudinal slot (2) of the valve ball guide tube (1).

5. Method for the operation of the device according to one of the claims 1 to 4, characterised thereby, that the bottle (12) with the metering device placed on is initially tilted into an intermediate pivotal setting, in which the valve ball (5) remains lying on the funnel shaped region (6) in the lower part (4) fixed to the valve ball guide tube (1) and that the bottle (12) is so pivoted further for the abrupt termination of the metering that the valve ball (5) falls in the valve ball guide tube (1) as far as the valve sealing seat (9).

## Revendications

1. Dispositif doseur présentant un clapet à bille, posé sur une bouteille de préférence flexible (12), comportant une bille de clapet (5) qui, dans une position d'orientation de la bouteille (12), ferme l'orifice d'écoulement (3) de celle-ci, ainsi qu'un tube de guidage de bille de clapet (1), présentant dans sa surface latérale au moins une fente longitudinale (2) conduisant à l'intérieur de la bouteille, caractérisé par une partie inférieure (4) disposée à l'extrémité du tube de guidage de bille de clapet (1) qui est opposée à l'orifice d'écoulement (3), élargie en forme d'entonnoir en partant de la paroi du tube sur une longueur au moins égale à la moitié du diamètre de la bille de clapet — mesurée dans la projection de la génératrice sur l'axe longitudinal du tube — l'angle compris entre l'axe longitudinal (7) du tube et une génératrice de la surface de la région en forme d'entonnoir (6) de la partie inférieure (4) étant d'au moins 30°.

2. Dispositif doseur selon la revendication 1, caractérisé par le fait que l'angle se situe entre 45 et 60°.

3. Dispositif doseur selon la revendication 2, caractérisé par le fait que la fente (2) s'étend jusqu'au voisinage du siège de clapet (9) prévu à la transition entre le tube de guidage de bille de clapet (1) et l'orifice d'écoulement (3).

4. Dispositif doseur selon l'une quelconque des revendications 1 à 3, caractérisé par le fait que la largeur libre du tube de guidage de bille de clapet (1) est nettement plus grande que le diamètre de la bille de clapet et que celui-ci est nettement plus grand que la largeur de la fente longitudinale (2) du tube de guidage de bille de clapet (1).

5. Procédé pour le fonctionnement du dispositif doseur selon l'une quelconque des revendications 1 à 4, caractérisé par le fait que l'on fait tout d'abord basculer la bouteille (12), sur laquelle est posé le dispositif doseur, à une position moyenne d'orientation dans laquelle la bille de clapet (4) reste sur la région en forme d'entonnoir (6), dans la partie inférieure (4) raccordée au tube de guidage de bille de clapet (1), et que, pour arrêter brusquement le dosage, on fait pivoter davantage la bouteille (12), de telle sorte que la bille de clapet (5) descend dans le tube de guidage de bille de clapet (1), jusqu'au siège de clapet (9).

Fig. 1

Fig. 2

Fig. 3